# EUROPÄISCHE PATENTSCHRIFT

(11) **EP 2 197 714 B1**
(45) Veröffentlichungstag und Bekanntmachung des Hinweises auf die Patenterteilung: **05.06.2013**
(21) Anmeldenummer: 08786816.2
(22) Anmeldetag: 04.08.2008
(51) Int. Cl.: B60R 25/00, G07C 9/00

(54) **FLEXIBLE SCHLÜSSELORTUNG FÜR PASSIVE ZUGANGS- UND FAHRBERECHTIGUNGSSYSTEME**
FLEXIBLE KEY DETECTION FOR PASSIVE ACCESS AND DRIVER AUTHORIZATION SYSTEMS
LOCALISATION DE CLÉ FLEXIBLE POUR SYSTÈMES D'ACCÈS ET D'AUTHENTIFICATION PASSIFS

(30) Priorität: 03.09.2007 DE 102007041783
(43) Veröffentlichungstag der Anmeldung: 23.06.2010
(73) Patentinhaber: Continental Automotive GmbH, 30165 Hannover (DE)
(72) Erfinder: RAMSAUER, Ludwig, 84056 Rottenburg (DE); HEILIG, Hubert, 93197 Zeitlarn (DE); HERBRIK, Heinz, 93083 Obertraubling (DE)
(86) Internationale Anmeldenummer: PCT/EP2008/060203
(87) Internationale Veröffentlichungsnummer: WO 2009/030563

(56) Entgegenhaltungen:
- EP-A- 1 816 039
- DE-A1- 10 029 170

## Beschreibung

Die Erfindung betrifft die Ortung eines Identifikationsgebers für ein passives Kfz-Zugangs- und Fahrberechtigungssystem und im Besonderen die Ortung eines Identifikationsgebers relativ zur Fahrzeugkarosserie mit der Unterscheidung, ob sich der Identifikationsgeber innerhalb oder außerhalb des Fahrzeugs befindet.

Bei passiven Zugangs- und Fahrberechtigungssystemen für Kraftfahrzeuge (Kfz) muss ein Fahrzeugführer lediglich einen Identifikationsgeber mit sich führen, um Zugang zum Fahrzeuginneren zu erhalten oder den Fahrzeugantrieb in Betrieb zu setzen. Da der Fahrzeugführer das Fahrzeug hier nicht mehr aktiv entriegeln muss, werden diese Fahrzeugzugangssysteme auch als schlüssellos bezeichnet. Um dies zu ermöglichen befindet sich im Fahrzeug eine Bordstation, die mit dem Identifikationsgeber per Funk kommunizieren kann.

Zur Einleitung eines Authentifizierungsvorgangs, bei dem die Berechtigung für den Zugang zum Fahrzeug bzw. zum Führen des Fahrzeugs über die Prüfung der Identität des Identifikationsgebers verifiziert wird, sendet die Bordstation ein Anfragesignal aus. Das Senden des Anfragesignals wird in der Regel durch eine Benutzerhandlung, wie z.B. das Betätigen eines Türgriffs, ausgelöst. Bei manchen Systemen werden die Anfragesignale von der Bordstation auch in regelmäßigen Zeitabständen ohne Benutzereinwirkung ausgesandt. Befindet sich der Identifikationsgeber innerhalb des Wirkungsbereichs der Bordstation, so beantwortet er das Anfragesignal indem er ein Datentelegramm mit Authentifizierungsdaten zurücksendet.

Nach einer erfolgreichen Authentifizierung wird, sofern sich der Identifikationsgeber außerhalb des zu öffnenden Fahrzeugs befindet, dessen Türschloss entriegelt, und die Fahrzeugtüre kann geöffnet werden. Das Starten des Fahrzeugs setzt einen neuen Authentifizierungsvorgang voraus, der z.B. durch Drücken eines Motorstartknopfs eingeleitet wird. Die Freischaltung der Fahrberechtigung erfolgt jedoch nur dann, wenn diese erneute Authentifizierung erfolgreich verläuft und der Identifikationsgeber während dieses Vorgangs innerhalb des Fahrzeugs geortet wird. Damit kann verhindert werden, dass ein Dritter vor dem Fahrberechtigten in das Fahrzeug eindringt und das Fahrzeug entwendet bzw. dass im Fahrzeug befindliche Kinder das Fahrzeug starten, während sich der Fahrer noch außerhalb des Fahrzeugs aufhält.

Üblicherweise wird das Anfragesignal im induktiven Frequenzbereich mithilfe eines im Allgemeinen im kHz-Bereich arbeitenden Niederfrequenzsenders (NF-Senders) der Bordstation ausgesandt und von einem NF-Empfänger des Identifikationsgebers empfangen. Das empfangene Anfragesignal wird dekodiert und zu einem Antwortsignal weiterverarbeitet, das von dem Identifikationsgeber über einen meist im MHz-Bereich betriebenen Hochfrequenzsender (HF-Sender) an die HF-Sende- und Empfangseinrichtung an die Bordstation übertragen wird.

Zur Ortung der Position des Identifikationsgebers sind am Fahrzeug mehrere NF-Antennen angeordnet, über die die Bordstation jeweils eine so genannte Wecksequenz (die im Allgemeinen einen Teil des Anfragesignals bildet) gefolgt von einem Messsignal aussendet. Diese NF-Antennen sind an speziellen, zur Triangulation, d.h. Ortung, des Identifikationsgebers geeigneten Stellen des Fahrzeugs angeordnet. Sie werden daher im Folgenden als Ortungsantennen bezeichnet. Die für die Ortung erforderliche Anzahl an NF-Antennen, wie auch die bei den einzelnen NF-Antennen zur Ortung verwendeten Sendeleistungen, hängen sehr wesentlich von der gestalterischen Ausbildung der Fahrzeuggeometrie ab.

Üblicherweise wird zur Ortung des Identifikationsgebers über jede einzelne der Ortungsantennen nacheinander ein Wecksignal gefolgt von einem Messsignal ausgesandt. Das Wecksignal dient der Synchronisation des Identifikationsgebers mit dem nachfolgend ausgesandten Messsignal, welches in der Regel von einem unmodulierten NF-Trägersignal, einem so genannten Dauerstrichsignal, gebildet wird. Das Messsignal wird in einem vorgegebenen Zeitabstand nach dem Wecksignal über eine bestimmte Dauer gesendet. Die jeweilige Sendestärke der Messsignale wird von der Steuereinheit der Bordstation festgelegt. Der Identifikationsgeber nimmt an jedem der empfangenen Messsignale eine Pegelbestimmung vor, d.h. eine Bestimmung der einzelnen Empfangsstärken der jeweiligen Messsignale. Die Ergebnisse der Pegelbestimmungen werden von dem Identifikationsgeber über einen Datenkommunikationskanal an die Bordstation gesandt.

Die Steuereinrichtung Bordstation prüft die Pegelbestimmungen des Identifikationsgebers für jede der über die verschiedenen NF-Antennen ausgesandten Messsignale und trianguliert hieraus die Position des Identifikationsgebers relativ zum Fahrzeug. Befindet sich der Identifikationsgeber bei einer Betätigung des Öffnungsmechanismus der Fahrzeugtüre nahe genug an und außerhalb der Türe, dann wird das Türschloss entriegelt. Wird der Identifikationsgeber im Fahrzeuginneren geortet nachdem eine Motorstarteinrichtung betätigt wurde, so wird die Freischaltung der Fahrberechtigung eingeleitet. Wird der Identifikationsgeber jedoch beim Öffnen der Fahrzeugtüre von Außen im Inneren des Fahrzeugs geortet, so bleibt das Türschloss weiterhin verriegelt. Ebenso wird die Fahrberechtigung nicht freigeschalten, wenn sich der Identifikationsgeber bei Betätigung der Motorstarteinrichtung außerhalb des Fahrzeugs befindet.

Statt über jede der Ortungsantennen ein Wecksignal gefolgt von einem Messsignal zu senden, kann von der Bordstation auch nur ein einziges Wecksignal gesendet werden, dem dann in vorher festgelegter Weise die von den einzelnen zur Ortung verwendeten NF-Antennen ausgesandten Messsignale folgen. Hierdurch kann der Ortungszyklus verkürzt werden, wodurch sich die Wahrscheinlichkeit einer Fehlortung von sich rasch dem Fahrzeug nähernden Identifikationsgebens vermindert.

Allen diesen Ortungssystemen ist gemein, dass die Anzahl der zur Ortung verwendeten Antennen wie auch der zur Ortung zu sendenden Messzyklen für jedes Fahrzeugmodell eigens festgelegt werden müssen. Denn die zur Ortung des Identifikationsgebers erforderliche Anzahl von Ortungsantennen wie Messsignalsequenzen ist von der jeweiligen Fahrzeuggeometrie abhängig. Somit muss für jeden Fahrzeugtyp ein eigens darauf abgestimmter Identifikationsgeber vorgesehen werden. Dies führt nicht nur bei der Fertigung von Fahrzeugzugangssystemen zu einem erheblichen und mit hohen Kosten verbundenen logistischen Aufwand. Auch der zur Nachbeschaffung von Identifikationsgebern hierbei erforderliche Verwaltungsaufwand wirkt sich negativ auf die Kostenstruktur aus.

Die Druckschrift DE 100 29 170 A1 offenbart ein Fernschließsystem, bestehend aus einer fahrzeugseitigen Steuereinrichtung zum Verriegeln und Entriegeln von Fahrzeugtüren und einem damit zusammenwirkenden elektronischen Schlüssel. Der Schlüssel sendet dabei ein kodiertes Betriebssignal aus, das durch die Steuereinrichtung zusammen mit dem relativen Abstand zwischen der Steuereinrichtung und dem Schlüssel ausgewertet wird, bevor das Verriegeln oder Entriegeln gestattet wird. Der relative Abstand wird anhand eines kodierten Sequenzimpulssignals bestimmt, welches bidirektional zwischen der Steuereinrichtung und dem elektronischen Schlüssel gesendet wird, wobei ein Vergleich des gesendeten und empfangenen Signals stattfindet.

Die Druckschrift EP-A-1 816 039 offenbart ein Fahrzeugzugangs- und Fahrberechtigungssystem mit einer in einem Fahrzeug angeordneten Bordstation und einem Identifikationsgeber, wobei die Bordstation dazu ausgebildet ist, eine Ortung des Identifikationsgebers relativ zum Fahrzeug durch Senden eines Wecksignals gefolgt von einer Messsignalabfolge und einer anschließenden Auswertung von Pegeldaten vorzunehmen, die von dem Identifikationsgeber im Anschluss an den Empfang der Messsignalabfolge an die Bordstation gesandt werden. Der Identifikationsgeber ist dazu ausgebildet, um von der Bordstation ausgesandte Messsignale zu empfangen, an jedem empfangenen Messsignal einer von der Bordstation ausgesandten Messsignalabfolge eine Pegelmessung vorzunehmen und Ergebnisse der Pegelmessung an die Bordstation zu senden.

Die Aufgabe der vorliegenden Erfindung besteht daher darin, eine automatisierte passive Zugangs- und Fahrberechtigung anzugeben, bei der ein Identifikationsgebertyp mit verschiedenen Fahrzeugtypen zusammen verwendet werden kann.

Die Aufgabe wird gemäß den unabhängigen Ansprüchen der Erfindung gelöst.

Die Erfindung umfasst ein Fahrzeugzugangs- und Fahrberechtigungssystem mit einer in einem Fahrzeug angeordneten Bordstation und einem Identifikationsgeber. Die Bordstation des Fahrzeugzugangs- und Fahrberechtigungssystems ist dazu ausgebildet, eine Ortung des Identifikationsgebers relativ zum Fahrzeug durch Senden eines Wecksignals gefolgt von einer Messsignalabfolge, sowie einer anschließenden Auswertung von Pegeldaten vorzunehmen, die von dem Identifikationsgeber im Anschluss an den Empfang der Messsignalabfolge an die Bordstation gesandt werden. Der Identifikationsgeber des Fahrzeugzugangs- und Fahrberechtigungssystems ist dazu ausgesandten Messsignalabfolge eine Pegelmessung vorzunehmen und die Ergebnisse der Pegelmessungen an die Bordstation zu senden. Hierbei ist die Bordstation ferner insbesondere dazu ausgebildet, jedes einzelne Messsignal der Messsignalabfolge nur über jeweils eine der zur Ortung vorgesehenen Antennen abzustrahlen und vor dem Aussenden der Messsignalabfolge Messinformationsdaten zu senden, deren Informationsgehalt die Anzahl der Messsignale in der Messsignalabfolge umfasst. Entsprechend ist der Identifikationsgeber insbesondere dazu ausgebildet, die Pegelmessungen an den Messsignalen der empfangenen Messsignalabfolge auf der Grundlage der von der Bordstation gesendeten Messinformationsdaten vorzunehmen

In diesem Zusammenhang wird darauf hingewiesen, dass die in dieser Beschreibung und den Ansprüchen zur Aufzählung von Merkmalen verwendeten Begriffe "umfassen", "aufweisen", "beinhalten", "enthalten" und "mit", sowie deren grammatikalische Abwandlungen, generell eine nichtabschließende Aufzählung von Merkmalen, wie z.B. Verfahrensschritten, Einrichtungen, Bereichen, Größen und dergleichen bezeichnen, die in keiner Weise das Vorhandensein anderer oder zusätzlicher Merkmale oder Gruppierungen von anderen oder zusätzlichen Merkmalen ausschließt.

Die Erfindung umfasst ferner eine Bordstation für ein Fahrzeugzugangs- und Fahrberechtigungssystem mit einer Steuereinrichtung, einer Sende- und Empfangseinrichtung und einer oder mehreren Ortungsantennen, wobei die Steuereinrichtung dazu ausgebildet ist, über die Sende- und Empfangseinrichtung zunächst ein Wecksignal und anschließend eine Messsignalabfolge zu senden, mittels der Sende- und Empfangseinrichtung anschließend von einem Identifikationsgeber Pegeldaten zu empfangen und auf der Grundlage dieser Pegeldaten eine Ortung des Identifikationsgebers durchzuführen. Die einzelnen Messsignale der Messsignalabfolge werden hierbei so über die Ortungsantennen gesendet, dass ein Messsignal immer nur über eine Ortungsantenne abgestrahlt wird. Die Steuereinrichtung ist ferner zum Senden von Messinformationsdaten über die Sende- und Empfangseinrichtung ausgebildet, wobei die Messinformationsdaten vor den Messsignalen gesendet werden und einen Informationsgehalt aufweisen, der die Anzahl der nachfolgend gesendeten Messsignale umfasst.

Weiterhin umfasst die Erfindung einen Identifikationsgeber für ein Fahrzeugzugangs- und Fahrberechtigungssystem mit einer Sende- und Empfangseinrichtung zum Senden und Empfangen von Daten und zum Empfangen von Messsignalen, einer Pegelmesseinrichtung zum Vornehmen einer Pegelmessung an einem empfangenen Messsignal und einer Steuereinrichtung zum Steuern der Sende- und Empfangseinrichtung und der Pegelmesseinrichtung. Die Steuereinrichtung ist hierbei dazu ausgebildet, die Pegelmessung an den empfangenen Messsignalen auf der Grundlage von über die Sende- und Empfangseinrichtung empfangenen Messinformationsdaten, deren Informationsgehalt die Anzahl der zu empfangenden Messsignale umfasst, vorzunehmen und das Ergebnis der Pegelmessungen über die Sende- und Empfangseinrichtung auszusenden.

Schließlich umfasst die Erfindung ein Verfahren zum Orten eines Identifikationsgebers relativ zu einem Fahrzeug mit Schritten zum Senden eines Wecksignals mittels einer Bordstation des Fahrzeugs, zum Senden von Messinformationsdaten mittels der Bordstation des Fahrzeugs, und zum Senden von Messsignalen mittels der Bordstation des Fahrzeugs, wobei die Messinformationsdaten nach dem Aussenden des Wecksignals und vor dem Aussenden der Messsignale gesendet werden und Informationen bezüglich der Anzahl der Messsignale in der Messsignalabfolge umfassen.

Die Erfindung ermöglicht die Verwendung eines "universellen" Identifikationsgebers, d.h. eines Identifikationsgebers, dessen Ortung keine im Vorhinein festgelegte Anzahl an Messsignalen erfordert, für unterschiedliche Bordstationen, da der Identifikationsgeber vor jedem Senden einer zu dessen Ortung bestimmten Messabfolge über die Anzahl der in der Messsignalabfolge enthaltenen Zahl von Messsignalen informiert wird. Die Erfindung wird in ihren abhängigen Ansprüchen weitergebildet.

Um die einzelnen Pegelmessungen mit den Messsignalen präzise zu synchronisieren, umfassen die Messinformationsdaten zweckmäßig Informationen bezüglich der Dauer der einzelnen Messsignale der Messsignalabfolge umfassen. Vorzugsweise ist die Dauer aller Messsignale der Messsignalabfolge gleich, wodurch eine aufwändige Steuerung der Pegelmessung vermieden werden kann.

In einer weiteren bevorzugten Ausführungsform ist die Bordstation dazu ausgebildet, die Anzahl der in einer Messsignalabfolge enthaltenen Messsignale abhängig vom Ergebnis einer früheren Ortung des Identifikationsgebers zu variieren. Dies ist insbesondere dann von Vorteil, wenn bei einer ersten Ortung nicht zweifelsfrei festgestellt werden kann, ob sich der Identifikationsgeber innerhalb oder außerhalb des Fahrgastraums befindet, so dass Zweifel bestehen, ob die Freischaltung der Fahrberechtigung eingeleitet werden kann. In diesem Fall kann in eine zweite, von der vorausgehenden abweichende Messsignalsignalabfolge ausgesandt werden, die eine sichere Ortung des Identifikationsgebers bezüglich seiner Lage zum Fahrzeuginnenraum ermöglicht.

Um eine zügige Ortung zu ermöglichen, während der sich die Position des Identifikationsgebers gegenüber dem Fahrzeug nicht wesentlich ändert, sendet der Identifikationsgeber die Ergebnisse der einzelnen Pegelmessungen an Messsignalen einer Messsignalabfolge vorzugsweise nach Abschluss der Pegelmessungen für die Messsignalabfolge und in der Reihenfolge an die Bordstation, in der die Pegelmessungen durchgeführt wurden.

Weitere Merkmale der Erfindung ergeben sich aus der folgenden Beschreibung erfindungsgemäßer Ausführungsbeispiele in Verbindung mit den Ansprüchen sowie den Figuren. Die einzelnen Merkmale können bei einer Ausführungsform gemäß der Erfindung je für sich oder zu mehreren verwirklicht sein. Bei der nachfolgenden Erläuterung einiger Ausführungsbeispiele der Erfindung wird auf die beiliegenden Figuren Bezug genommen, von denen
- Figur 1: ein Fahrzeugzugangs- und Fahrberechtigungssystem zeigt, bei dem der Identifikationsgeber mit unterschiedlich ausgebildeten Bordstationen zusammen betrieben werden kann,
- Figur 2: eine beispielhafte Anordnung von Ortungsantennen an einem Fahrzeug und die zur Ortung verwendeten Abstrahlbereiche der Ortungsantennen veranschaulicht, und
- Figur 3: ein Verfahren zum Orten des Identifikationsgebers bei einem Fahrzeugzugangs- und Fahrberechtigungssystem gemäß der Figur 1 zeigt.

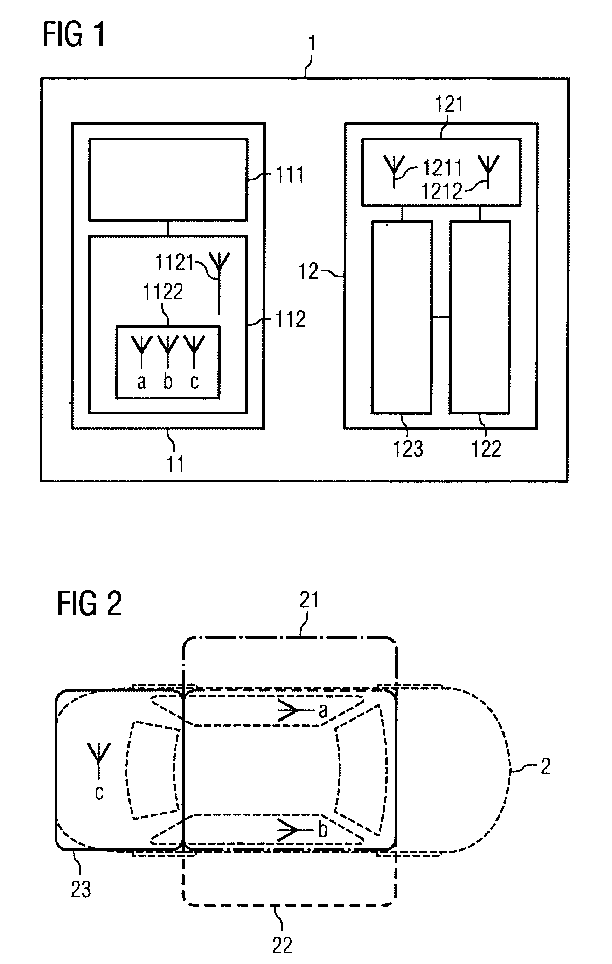

Das in der Figur 1 in Form eines Blockschaltbilds dargestellte Fahrzeugzugangs- und Fahrberechtigungssystem 1 umfasst eine Bordstation 11 und einen Identifikationsgeber 12. Die Bordstation ist in einem Fahrzeug angeordnet, dessen Zugangs- und Fahrberechtigungen mithilfe der Bordstation 11 und dem Identifikationsgeber 12 überwacht werden. Es wird darauf hingewiesen, dass in der Figur 1 nur diejenigen Komponenten des Fahrzeugzugangs- und Fahrberechtigungssystems dargestellt sind, die zur Erläuterung der Erfindung erforderlich sind. Andere Komponenten, die für den Betrieb der Fahrzeugzugangs- und Fahrberechtigungssystem wesentlich, für die Darstellung der Erfindung aber ohne wesentliche Bedeutung sind, sind in der Figur nicht dargestellt, werden aber bei dem gezeigten System als vorhanden unterstellt.

Die Bordstation 11 weist eine Steuereinrichtung 111 und eine Sende- und Empfangseinrichtung 112 auf. Die Sende- und Empfangseinrichtung 112 umfasst zumindest eine Kommunikationsantenne 1121, über die der Austausch von Datentelegrammen mit dem Identifikationsgeber abgewickelt wird. Die Antennenanordnung 1122 weist mehrere Ortungsantennen a, b und c auf, über die jeweils Messsignale zur Ortung eines Identifikationsgebers 12 ausgesandt werden. In der Figur 2 ist eine typische Anordnung der Ordnungsantennen a, b und c an einem Fahrzeug 2 veranschaulicht, wobei die jeweiligen Bereiche 21 (für Antenne a), 22 (für Antenne b) und 23 (für Antenne c) illustriert sind, innerhalb deren eine Entriegelung der Fahrzeugtüren vorgenommen werden kann. Die Anzahl der erforderlichen Ortungsantennen hängt von der jeweiligen Geometrie des Fahrzeugs und der Art der Ortung ab. Im Prinzip erhält man auch mit nur einer Ortungsantenne eine bereits eine Information bezüglich der relativen Position des Identifikationsgebers. Es sind auch Systeme mit zwei Ortungsantennen möglich. In der Regel werden jedoch wie dargestellt drei Antennen verwendet und in einigen Fällen auch mehr.

Die Steuereinrichtung 111 der Bordstation 11 steuert das Senden und Empfangen von Daten und Signalen über die Sende- und Empfangseinrichtung 112 und ist ferner zur Verarbeitung empfangener Daten ausgebildet. In einer (nicht gezeigten) Speichereinrichtung der Steuereinrichtung 111 sind Ortungsdaten abgespeichert, die zumindest eine Messsignalabfolge repräsentieren. In diesen Daten wird bestimmt, in welcher Reihenfolge die jeweiligen Messsignale über welche der Ortungsantennen a, b oder c mit welcher Sendeleistung abgestrahlt werden sollen.

Bei der Einleitung eines Authentifizierungsvorgangs sendet die Basisstation zunächst ein als Wecksignal bezeichnetes Anfragesignal aus. Üblicherweise wird das Wecksignal im niederfrequenten Übertragungsband über eine der Kommunikationsantennen 1121 der Bordstation 11 gesendet. Da die Ortung des Identifikationsgebers ebenfalls im Niederfrequenzband des Fahrzeugzugangs- und Fahrberechtigungssystems erfolgt, kann das Wecksignal alternativ oder zusätzlich auch über eine oder mehrere der Ortungsantennen a, b, und c gesendet werden. Nach dem Wecksignal sendet die Basisstation die zur Ortung des Identifikationsgebers erforderlichen Signale aus. Diese enthalten Messsignale, die nacheinander über die Ortungsantennen ausgesandt werden. Dabei wird immer nur ein Messsignal über jeweils nur eine Ortungsantenne ausgesandt. Stärke, Dauer und Antennenzuordnung eines jeden der Messsignale sind in den Ortungsdaten vorgegeben.

Da sich die Anzahl der Ortungsantennen wie die Anzahl der zur Ortung eines Identifikationsgebers benötigten Messsignale von Fahrzeugtyp zu Fahrzeugtyp unterscheiden können, ist die genaue Anzahl der Messsignale in einer Messsignalabfolge von Fahrzeugtyp zu Fahrzeugtyp verschieden. Damit der Identifikationsgeber mit mehreren Fahrzeugtypen zusammen verwendbar ist, muss seine Funktion auch bei Messsignalabfolgen gewährleistet sein, die unterschiedlich viele Messsignale enthalten. Um dies zu gewährleisten veranlasst die Steuereinrichtung 111 die Sende- und Empfangseinrichtung 112 zum Aussenden von Messinformationsdaten, aus denen die Anzahl der in einer Messsignalabfolge enthaltenen Messsignale hervorgeht. Die Messinformationsdaten werden vorzugsweise nach dem Wecksignal und vor der Übertragung der Messsignalabfolge gesendet.

Der Identifikationsgeber 12 weist eine Sende- und Empfangseinrichtung 121 mit einer Antenne 1211 zum Empfangen und Senden von Signalen bzw. Daten im höherfrequenten Übertragungsband und mit einer Antenne 1212 zum Empfangen und Senden von Signalen und Daten im niederfrequenten Übertragungsband auf. Zur Steuerung der Abläufe ist im Identifikationsgeber eine Steuereinrichtung 123 vorgesehen. Die Steuereinrichtung kontrolliert sowohl die Sende- und Empfangseinrichtung 121 als auch die Pegelmesseinrichtung 122.

Nach dem Empfang eines Wecksignals nimmt die Steuereinrichtung 123 die Messinformationsdaten entgegen, die Informationen über die Anzahl der nachfolgenden Messsignale enthalten. Im einfachsten Fall sind der zeitliche Abstand des ersten Messsignals zum Wecksignal und die Dauer eines jeden der Messsignale vorgegeben, wobei alle Messsignale vorzugsweise dieselbe Länge bzw. Dauer aufweisen. Zur besseren Anpassung an die Fahrzeuggeometrie können jedoch auch unterschiedlich lange Messsignale in einer Messsignalabfolge verwendet werden. In diesem Fall enthalten die Messinformationsdaten auch Informationen über die jeweilige Dauer der einzelnen Messsignale der nachfolgend gesendeten Messsignalabfolge.

Auf der Grundlage der empfangenen Messinformationsdaten veranlasst die Steuereinrichtung 123 die Pegelmesseinrichtung 122 zur Bestimmung der Empfangspegel für alle Messsignale einer nachfolgend empfangenen Messsignalabfolge. Nach Abschluss der Pegelmessungen werden deren Ergebnisse an die Bordstation 11 übermittelt, worin sie zu einer Bestimmung der Lage des Identifikationsgebers 12 relativ zum Fahrzeug 2 ausgewertet werden. Anhand dieser Lagebestimmung kann festgestellt werden, ob sich der Identifikationsgeber 12 nahe genug am Fahrzeug 2 befindet, um das Fahrzeug 2 entriegeln zu können, oder sich sogar innerhalb des Fahrzeugs 2 befindet, so dass ein Freischalten der Fahrberechtigung eingeleitet werden kann.

Befindet sich der Identifikationsgeber jedoch nahe der Fahrzeugkarosserie, so kann die Bestimmung, ob er sich innerhalb oder außerhalb des Fahrzeugs befindet, oft nicht mit ausreichender Sicherheit vorgenommen werden. In diesem Fall sendet die Bordstation 11 eine zweite Messsignalabfolge aus, die in der Wahl der zum Senden von Messsignalen benutzten Ortungsantennen und der dabei jeweils eingesetzten Sendeleistungen speziell auf die Klärung dieser Problemstellung abgestimmt ist. Die Anzahl der Messsignale kann sich dabei von der zuvor gesendeten Messsignalfolge unterscheiden. Wie zuvor geht der Messsignalabfolge ein Wecksignal voraus, das den neuen Ortungsvorgang am Identifikationsgeber ankündigt und dort auch zur Synchronisierung der Pegelmessungen mit den Messsignalen dient. Die Anzahl und eventuelle Dauer der einzelnen Messsignale der Messsignalabfolge ist wiederum Gegenstand von Messinformationsdaten, die noch vor dem Aussenden der neuen Messsignalabfolge an den Identifikationsgeber übermittelt werden. Um die zur Ortung eines Identifikationsgebers benötigte Zeitspanne möglichst kurz zu halten werden die Ergebnisse der Pegelmessungen für eine Messsignalabfolge in einer (nicht dargestellten) Speichereinrichtung des Identifikationsgebers zwischengespeichert und nach Abschluss der an einer Messsignalabfolge vorgenommenen Pegelmessungen geschlossen an die Bordstation zur Auswertung übertragen. Vorzugsweise werden die Ergebnisse der Pegelmessungen in der Reihenfolge übertragen, in der sie vorgenommen wurden. Alternativ können sie auch in der umgekehrten Reihenfolge übertragen werden. Dies wäre zum Beispiel dann von Vorteil, wenn dadurch ein schnelleres Auslesen der Ergebnisse aus der Speichereinrichtung möglich ist.

Die beschriebene Erfindung ermöglicht einerseits die Verwendung eines "universellen" Identifikationsgebers, d.h. eines Identifikationsgebers, dessen Ortung keine im Vorhinein festgelegte Anzahl an Messsignalen erfordert. Die zur Ortung verwendeten Messsignalabfolgen können eine unterschiedliche Zahl von Messsignalen enthalten, wobei die Anzahl der in einer Abfolge enthaltenen Messsignale je nach Messanforderung und auch wie oben angegeben in Abhängigkeit vorangegangener Ortungen variiert werden kann.

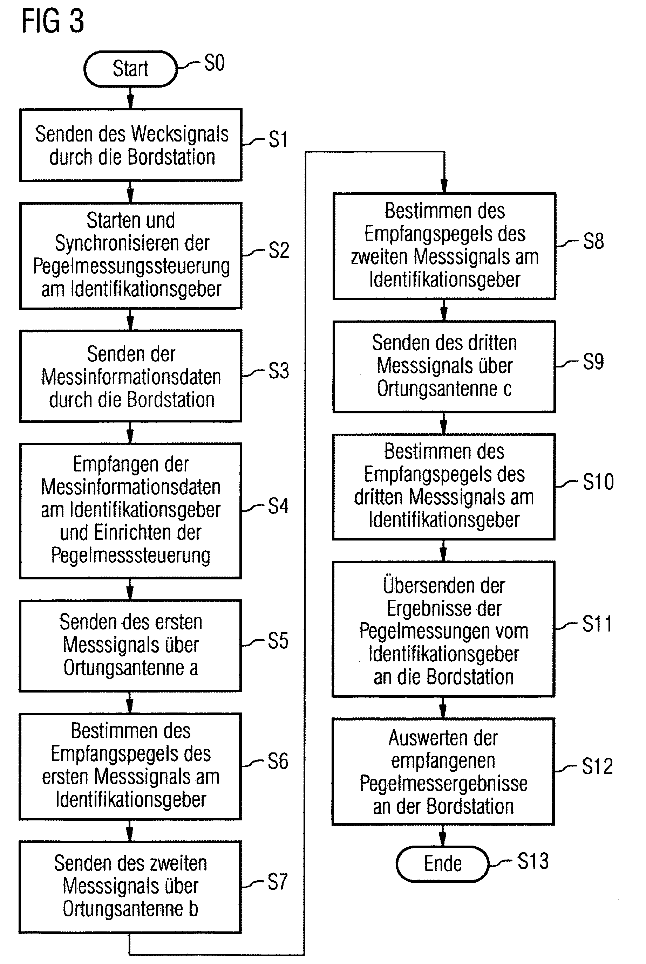

In dem Flussdiagramm der Figur 3 sind die grundlegenden Schritte eines von dem Fahrzeugzugangs- und Fahrberechtigungssystem 1 ausgeführten Verfahrens zum Orten eines Identifikationsgebers 12 relativ zu einem Fahrzeug 2 dargestellt. Nach dem Start des Verfahrens in Schritt S0 sendet die Bordstation 11 über deren Sende- und Empfangseinrichtung 112 zunächst in Schritt S1 ein Wecksignal aus. Das Wecksignal wird an dem Identifikationsgeber 12 empfangen, woraufhin in Schritt S2 des Verfahrens die Steuerung zur Pegelmessung am Identifikationsgeber gestartet und auf das Wecksignal synchronisiert wird. Die dem Wecksignal nachfolgenden Messinformationsdaten werden von der Bordstation in Schritt S3 des Verfahrens gesendet und in Schritt S4 am Identifikationsgeber empfangen und zum Einrichten der Pegelmesssteuerung ausgewertet.

In Schritt S5 wird über die Ortungsantenne a das erste Messsignal der Messsignalabfolge gesendet. Zur selben Zeit wird am Identifikationsgeber in Schritt S6 der Empfangspegel dieses ersten Messsignals bestimmt. In den Schritten S7 und S8 sowie S9 und S10 werden in analoger Weise das zweite und dritte Messsignal der Messsignalabfolge über die Ortungsantennen b bzw. c gesendet und deren Empfangspegel am Identifikationsgeber bestimmt. Nach Beendigung der Messsignalabfolge werden die Ergebnisse der Pegelmessungen in Schritt S11 vom Identifikationsgeber an die Bordstation gesendet, wo sie in Schritt S12 zur Lokalisierung bzw. Ortung des Identifikationsgebers ausgewertet werden. Das Verfahren endet in Schritt S13.

### Bezugszeichenliste

| | |
|---|---|
| 1 | Fahrzeugzugangs- und Fahrberechtigungssystem |
| 11 | Bordstation |
| 111 | Steuereinrichtung |
| 112 | Sende- und Empfangseinrichtung |
| 1121 | Kommunikationsantenne |
| 1122 | Ortungsantennenanordnung |
| a | erste Ortungsantenne |
| b | zweite Ortungsantenne |
| c | dritte Ortungsantenne |
| 12 | Identifikationsgeber |
| 121 | Sende- und Empfangseinrichtung |
| 1211 | Antenne |
| 1212 | Niederfrequenzantenne |
| 122 | Pegelmesseinrichtung |
| 123 | Steuereinrichtung |
| 2 | Fahrzeug |
| 21 | Ortungsbereich der Antenne a |
| 22 | Ortungsbereich der Antenne b |
| 23 | Ortungsbereich der Antenne c |

## Patentansprüche

1. Fahrzeugzugangs- und Fahrberechtigungssystem mit einer in einem Fahrzeug (2) angeordneten Bordstation (11) und einem Identifikationsgeber (12), wobei
- die Bordstation dazu ausgebildet ist, eine Ortung des Identifikationsgebers relativ zum Fahrzeug durch Senden eines Wecksignals gefolgt von einer Messsignalabfolge und einer anschließenden Auswertung von Pegeldaten vorzunehmen, die von dem Identifikationsgeber im Anschluss an den Empfang der Messsignalabfolge an die Bordstation gesandt werden, und
- der Identifikationsgeber dazu ausgebildet ist, von der Bordstation ausgesandte Signale zu empfangen, an jedem empfangenen Messsignal einer von der Bordstation ausgesandten Messsignalabfolge eine Pegelmessung vorzunehmen und die Ergebnisse der Pegelmessungen an die Bordstation zu senden, **dadurch gekennzeichnet, dass**
- die Bordstation ferner dazu ausgebildet ist, jedes einzelne Messsignal der Messsignalabfolge nur über jeweils eine der zur Ortung vorgesehenen eine oder mehreren Antennen (1122, a, b, c) abzustrahlen und vor dem Aussenden der Messsignalabfolge Messinformationsdaten zu senden, deren Informationsgehalt die Anzahl der Messsignale in der Messsignalabfolge umfasst, und
- der Identifikationsgeber dazu ausgebildet ist, die Pegelmessungen an den Messsignalen der empfangenen Messsignalabfolge auf der Grundlage der von der Bordstation gesendeten Messinformationsdaten vorzunehmen.

2. Fahrzeugzugangs- und Fahrberechtigungssystem nach Anspruch 1,
**dadurch gekennzeichnet,**
**dass** die Messinformationsdaten Informationen bezüglich der Dauer der einzelnen Messsignale der Messsignalabfolge umfassen.

3. Fahrzeugzugangs- und Fahrberechtigungssystem nach Anspruch 1 oder 2,
**dadurch gekennzeichnet,**
**dass** die Dauer aller Messsignale der Messsignalabfolge gleich ist.

4. Fahrzeugzugangs- und Fahrberechtigungssystem nach Anspruch 1, 2 oder 3,
**dadurch gekennzeichnet,**
**dass** die Bordstation (11) ausgebildet ist, die Anzahl der in einer Messsignalabfolge enthaltenen Messsignale abhängig vom Ergebnis einer früheren Ortung des Identifikationsgebers (12) zu variieren.

5. Fahrzeugzugangs- und Fahrberechtigungssystem nach einem der vorhergehenden Ansprüche,
**dadurch gekennzeichnet,**
**dass** der Identifikationsgeber (12) die Ergebnisse der einzelnen Pegelmessungen an Messsignalen einer Messsignalabfolge nach Abschluss der Pegelmessungen für die Messsignalabfolge in der Reihenfolge an die Bordstation (11) sendet, in der die Pegelmessungen durchgeführt wurden.

6. Bordstation für ein Fahrzeugzugangs- und Fahrberechtigungssystem (1) mit einer Steuereinrichtung (111), einer Sende- und Empfangseinrichtung (112) und einer oder mehreren Ortungsantennen (a, b, c), wobei die Steuereinrichtung (111) dazu ausgebildet ist, über die Sende- und Empfangseinrichtung (112) zunächst ein Wecksignal und anschließend mehrere Messsignale zu senden, über die Sende- und Empfangseinrichtung (112) von einem Identifikationsgeber (12) Pegeldaten zu empfangen und auf der Grundlage dieser Pegeldaten eine Ortung des Identifikationsgebers (12) durchzuführen, wobei die Messsignale so über die eine oder die mehreren Ortungsantennen (a, b, c) gesendet werden, dass ein Messsignal immer nur über eine Ortungsantenne abgestrahlt wird,
**dadurch gekennzeichnet,**
**dass** die Steuereinrichtung (111) ferner zum Senden von Messinformationsdaten über die Sende- und Empfangseinrichtung (112) ausgebildet ist, wobei die Messinformationsdaten vor den Messsignalen gesendet werden und einen Informationsgehalt aufweisen, der die Anzahl der nachfolgend gesendeten Messsignale umfasst.

7. Bordstation nach Anspruch 6,
**dadurch gekennzeichnet,**
**dass** die Steuereinrichtung (111) ausgebildet ist, die Anzahl der in einer Messsignalabfolge enthaltenen Messsignale abhängig vom Ergebnis einer früheren Ortung des Identifikationsgebers (12) zu variieren.

8. Bordstation nach Anspruch 6 oder 7,
**dadurch gekennzeichnet,**
**dass** die Messinformationsdaten Informationen bezüglich der Dauer der einzelnen Messsignale der Messsignalabfolge umfassen.

9. Bordstation nach einem der Ansprüche 6 bis 8,
**dadurch gekennzeichnet,**
**dass** die Dauer aller Messsignale der Messsignalabfolge gleich ist.

10. Identifikationsgeber für ein Fahrzeugzugangs- und Fahrberechtigungssystem mit
- einer Sende- und Empfangseinrichtung (121) zum Senden und Empfangen von Daten und zum Empfangen von Messsignalen,
- einer Pegelmesseinrichtung (122) zum Vornehmen einer Pegelmessung an einem empfangenen Messsignal und
- einer Steuereinrichtung (123) zum Steuern der Sende- und Empfangseinrichtung und der Pegelmesseinrichtung,
**dadurch gekennzeichnet,**
**dass** die Steuereinrichtung (123) ausgebildet ist, die Pegelmessung an den empfangenen Messsignalen auf der Grundlage von über die Sende- und Empfangseinrichtung (121) empfangenen Messinformationsdaten, deren Informationsgehalt die Anzahl der zu empfangenden Messsignale umfasst, vorzunehmen und das Ergebnis der Pegelmessungen über die Sende- und Empfangseinrichtung auszusenden.

11. Verfahren zum Orten eines Identifikationsgebers (12) relativ zu einem Fahrzeug (2) mit Schritten zum
- Senden eines Wecksignals mittels einer Bordstation des Fahrzeugs (S1),
- Senden von Messinformationsdaten mittels der Bordstation des Fahrzeugs (S3), und
- Senden einer Messsignalabfolge mittels der Bordstation des Fahrzeugs (S5, S7, S9),
wobei die Messinformationsdaten nach dem Aussenden des Wecksignals und vor dem Aussenden der Messsignale gesendet werden und Informationen bezüglich der Anzahl der Messsignale in der Messsignalabfolge umfassen.

12. Verfahren nach Anspruch 11,
**dadurch gekennzeichnet,**
**dass** Messinformationsdaten Informationen bezüglich der Dauer der einzelnen Messsignale der Messsignalabfolge umfassen.

## Claims

1. Vehicle access and driving authorization system having an on-board station (11) arranged in a vehicle (2) and an identification transmitter (12),
- the on-board station being designed to locate the identification transmitter relative to the vehicle by transmitting a wake-up signal followed by a measurement signal sequence and subsequent evaluation of level data which are transmitted by the identification transmitter to the on-board station following the reception of the measurement signal sequence, and
- the identification transmitter being designed to receive signals emitted by the on-board station, to carry out a level measurement on each received measurement signal in a measurement signal sequence emitted by the on-board station and to transmit the results of the level measurements to the on-board station,
**characterized in that**
- the on-board station is also designed to emit each individual measurement signal in the measurement signal sequence only via in each case one of the one or more antennas (1122, a, b, c) provided for locating purposes and, before emitting the measurement signal sequence, to transmit measurement information data, the information content of which comprises the number of measurement signals in the measurement signal sequence, and
- the identification transmitter is designed to carry out the level measurements on the measurement signals in the received measurement signal sequence on the basis of the measurement information data transmitted by the on-board station.

2. Vehicle access and driving authorization system according to Claim 1,
**characterized in that**
the measurement information data comprise information relating to the duration of the individual measurement signals in the measurement signal sequence.

3. Vehicle access and driving authorization system according to Claim 1 or 2,
**characterized in that**
the duration of all measurement signals in the measurement signal sequence is the same.

4. Vehicle access and driving authorization system according to Claim 1, 2 or 3,
**characterized in that**
the on-board station (11) is designed to vary the number of measurement signals contained in a measurement signal sequence on the basis of the result of earlier locating of the identification transmitter (12).

5. Vehicle access and driving authorization system according to one of the preceding claims,
**characterized in that**
the identification transmitter (12) transmits the results of the individual level measurements on measurement signals in a measurement signal sequence, following the conclusion of the level measurements for the measurement signal sequence, to the on-board station (11) in the order in which the level measurements were carried out.

6. On-board station for a vehicle access and driving authorization system (1), having a control device (111), a transmitting and receiving device (112) and one or more locating antennas (a, b, c), the control device (111) being designed to first of all transmit a wake-up signal and then a plurality of measurement signals via the transmitting and receiving device (112), to receive level data from an identification transmitter (12) via the transmitting and receiving device (112) and to locate the identification transmitter (12) on the basis of these level data, the measurement signals being transmitted via the one or more locating antennas (a, b, c) in such a manner that a measurement signal is only ever emitted via one locating antenna,
**characterized in that**
the control device (111) is also designed to transmit measurement information data via the transmitting and receiving device (112), the measurement information data being transmitted before the measurement signals and having an information content comprising the number of measurement signals which are subsequently transmitted.

7. On-board station according to Claim 6,
**characterized in that**
the control device (111) is designed to vary the number of measurement signals contained in a measurement signal sequence on the basis of the result of earlier locating of the identification transmitter (12).

8. On-board station according to Claim 6 or 7,
**characterized in that**
the measurement information data comprise information relating to the duration of the individual measurement signals in the measurement signal sequence.

9. On-board station according to one of Claims 6 to 8,
**characterized in that**
the duration of all measurement signals in the measurement signal sequence is the same.

10. Identification transmitter for a vehicle access and driving authorization system, having
- a transmitting and receiving device (121) for transmitting and receiving data and for receiving measurement signals,
- a level measuring device (122) for carrying out a level measurement on a received measurement signal, and
- a control device (123) for controlling the transmitting and receiving device and the level measuring device,
**characterized in that**
the control device (123) is designed to carry out the level measurement on the received measurement signals on the basis of measurement information data which are received via the transmitting and receiving device (121) and the information content of which comprises the number of measurement signals to be received and to emit the result of the level measurements via the transmitting and receiving device.

11. Method for locating an identification transmitter (12) relative to a vehicle (2), having steps for
- transmitting a wake-up signal using an on-board station of the vehicle (S1),
- transmitting measurement information data using the on-board station of the vehicle (S3), and
- transmitting a measurement signal sequence using the on-board station of the vehicle (S5, S7, S9),
the measurement information data being transmitted after the emission of the wake-up signal and before the emission of the measurement signals and comprising information relating to the number of measurement signals in the measurement signal sequence.

12. Method according to Claim 11,
**characterized in that**
measurement information data comprise information relating to the duration of the individual measurement signals in the measurement signal sequence.

## Revendications

1. Système d'autorisation d'accès et de conduite d'un véhicule avec une station embarquée (11) agencée dans un véhicule (2) et un émetteur d'identification (12), dans lequel
- la station embarquée est conçue pour effectuer une localisation de l'émetteur d'identification par rapport au véhicule via l'émission d'un signal de réveil suivi d'une séquence de signaux de mesure puis d'une analyse de données de niveau, qui seront au final envoyées à la station embarquée par l'émetteur d'identification après la réception de la séquence de signaux de mesure, et
- l'émetteur d'identification est conçu pour recevoir les signaux envoyés par la station embarquée, effectuer une mesure de niveau sur chaque signal de mesure reçu d'une séquence de signaux de mesure envoyée par la station embarquée et envoyer les résultats des mesures de niveau à la station embarquée,
**caractérisé en ce que**
- la station embarquée est en outre conçue pour émettre chaque signal de mesure individualisé de la séquence de signaux de mesure respectivement uniquement via une des une ou plusieurs antennes (1122, a , b ,c) prévues pour la localisation, et envoyer des données d'informations de mesure avant l'envoi de la séquence de signaux de mesure, la teneur en informations desquelles données d'informations de mesure comprenant le nombre de signaux de mesure dans la séquence de signaux de mesure, et
- l'émetteur d'identification est conçu pour effectuer les mesures de niveau sur les signaux de mesure de la séquence de signaux de mesure reçue sur la base des données d'informations de mesure envoyées par la station embarquée.

2. Système d'autorisation d'accès et de conduite d'un véhicule selon la revendication 1,
**caractérisé en ce que**
les données d'informations de mesure comprennent des informations concernant la durée des différents signaux de mesure de la séquence de signaux de mesure.

3. Système d'autorisation d'accès et de conduite d'un véhicule selon la revendication 1 ou 2,
**caractérisé en ce que**
la durée de tous les signaux de mesure de la séquence de signaux de mesure est identique.

4. Système d'autorisation d'accès et de conduite d'un véhicule selon la revendication 1, 2 ou 3,
**caractérisé en ce que**
la station embarquée (11) est conçue pour faire varier le nombre des signaux de mesure contenus dans une séquence de signaux de mesure en fonction du résultat d'une localisation précédente de l'émetteur d'identification (12).

5. Système d'autorisation d'accès et de conduite d'un véhicule selon l'une des revendications précédentes,
**caractérisé en ce que**
l'émetteur d'identification (12) envoie à la station embarquée (11) les résultats des différentes mesures de niveau sur les signaux de mesure d'une séquence de signaux de mesure après la fin des mesures de niveau pour la séquence de signaux de mesure dans l'ordre dans lequel les mesures de niveau ont été effectuées.

6. Station embarquée pour un système d'autorisation d'accès et de conduite d'un véhicule (1) avec un dispositif de commande (111), un dispositif d'émission et de réception (112) et une ou plusieurs antennes de localisation (a, b, c), dans laquelle le dispositif de commande (111) est conçu pour envoyer, via le dispositif d'émission et de réception (112), d'abord un signal de réveil puis plusieurs signaux de mesure, envoyer, via le dispositif d'émission et de réception (112), des données de niveau d'un émetteur d'identification (12), et effectuer une localisation de l'émetteur d'identification (12) sur la base de ces données de niveau, dans laquelle les signaux de mesure sont envoyés via la ou les plusieurs antennes de localisation (a, b, c) de telle sorte qu'un signal de mesure soit toujours émis uniquement via une antenne de localisation,
**caractérisée en ce que**
le dispositif de commande (111) est conçu en outre pour envoyer des données d'informations de mesure via le dispositif d'émission et de réception (112), les données d'informations de mesure étant envoyées avant les signaux de mesure et présentant une teneur en informations qui comprend le nombre des signaux de mesure envoyés par la suite.

7. Station embarquée selon la revendication 6,
**caractérisée en ce que**
le dispositif de commande (111) est conçu pour faire varier le nombre de signaux de mesure contenus dans une séquence de signaux de mesure en fonction du résultat d'une localisation précédente de l'émetteur d'identification (12).

8. Station embarquée selon la revendication 6 ou 7,
**caractérisée en ce que**
les données d'informations de mesure comprennent des informations concernant la durée des différents signaux de mesure de la séquence de signaux de mesure.

9. Station embarquée selon l'une des revendications 6 à 8,
**caractérisée en ce que**
la durée de tous les signaux de mesure de la séquence de signaux de mesure est identique.

10. Emetteur d'identification pour un système d'autorisation d'accès et de conduite d'un véhicule avec
- un dispositif d'émission et de réception (121) pour l'émission et la réception de données et pour la réception de signaux de mesure,
- un dispositif de mesure de niveau (122) pour la réalisation d'une mesure de niveau sur un signal de mesure reçu, et
- un dispositif de commande (123) pour la commande du dispositif d'émission et de réception et du dispositif de mesure du niveau,
**caractérisé en ce que**
le dispositif de commande (123) est conçu pour effectuer la mesure de niveau sur les signaux de mesure reçus sur la base des données d'informations de mesure reçues via le dispositif d'émission et de réception (121), la teneur en informations de ces données d'informations de mesure comprenant le nombre de signaux de mesure à recevoir, et envoyer le résultat des mesures de niveau via le dispositif d'émission et de réception.

11. Procédé de localisation d'un émetteur d'identification (12) par rapport à un véhicule (2) avec les étapes suivantes :
- envoi d'un signal de réveil au moyen d'une station embarquée du véhicule (S1),
- envoi de données d'informations de mesure au moyen de la station embarquée du véhicule (S3), et
- envoi d'une séquence de signaux de mesure au moyen de la station embarquée du véhicule (S5, S7, S9),
dans lequel les données d'informations de mesure sont envoyées après l'envoi du signal de réveil et avant l'envoi des signaux de mesure et comprennent des informations concernant le nombre de signaux de mesure dans la séquence de signaux de mesure.

12. Procédé selon la revendication 11,
**caractérisé en ce que**
les données d'informations de mesure comprennent des informations concernant la durée des différents signaux de mesure de la séquence de signaux de mesure.
